# EUROPEAN PATENT APPLICATION

(11) **EP 2 669 391 A1**
(43) Date of publication of application: **04.12.2013**
(21) Application number: 12460028.9
(22) Date of filing: 01.06.2012
(51) Int. Cl.: C22B 7/04

(54) **Method of processing slag into raw material and slag processing line**

(71) Applicant: Calvia Spólka Z Ograniczona Odpowiedzialnoscia, 00-312 Warszawa (PL)
(72) Inventor: Andersson, Lars, 00-312 Warszawa (PL); Johanneson, Peder, 00-312 Warszawa (PL)

(57) **Abstract**

Method of processing slag preferably from submerged arc welding process into raw material in which the slag is deprived of dust in the first place, and then is subjected to magnetic separation of metal particles and then is crushed and sieved further to a specific grain size of raw material. Line for processing of slag into raw material consisting of the hoist (7) hopper (1) equipped with a vibrating feeder (8), belt conveyors (2) (3), the magnetic separator (4), shredding device (5) and sieving station (6) containing at least two containers (9)(10) used for collection of the material

## Description

The present invention relates to the method and line for processing slag into raw material. Raw material obtained according to the method and line described in invention can be used in many fields, preferably in the production of flux for submerged arc welding. The invention relates in particular to submerged arc welding slag recycling but can also be applied for any other type of slag.

Slag is a waste product of metallurgical processes - alloy containing impurities of ores, fluxes, and a certain amount of metal oxide or residue after combustion such as coal, coke, which form a glassy mass of sintered ash. It is also a waste product of submerged arc welding process.

Submerged arc welding is used primarily for the construction of low-carbon steels, low alloy steels and high alloy steels. The waste slag from submerged arc welding is produced in the form of the shell surrounding the weld. Composed of solidified liquid slag, which is formed during welding in the weld pool as a result of melting the wire electrode, the welded material and flux. In general slag composition is dependent on the characteristics of the material used as a flux. The submerged arc welding flux is a granular material, powder of specified composition mainly of grain size 0,2-1,8 mm, which should provide the properties required and necessary for the welding processes. International Institute of Welding divides fluxes into fused, bonded and agglomerated. Fluxes are obtained by appropriate processing of raw materials (smelting, sintering, pulverizing).

Prior methods and lines used for processing slag focus mostly on the recovery of the flux from submerged arc welding slag shell. As exemplified and described in the application CN101585122 where slag shell is recovered and ground and the resulting material is reused in the production of the flux. The description of other solution i.e. CN1095325 indicates that the welding flux can be directly made up of the slags from capola furnace through mechanical crushing and sieving.

Prior solutions, however, focus on the processing of the slag to the form suitable as an add-on to the flux or flux substitute. The ingredients used for flux production are very carefully selected because of the specific properties and benefits required from the flux in the welding process. The virgin flux is prepared on the basis of raw materials only. Such flux is melted in the process of welding into slag. Although the specific elements contained in the slag may be similar, the chemical form of elements in the generated slag will be significantly different from that of the virgin flux. Processing the slag based upon prior solutions will not result in obtaining the raw material.

The present invention focuses on such processing of the slag which results in obtaining the raw material preferably used for production of virgin fluxes. The recovery of raw material from the slag eliminates the problem of quality of fluxes, where the recovered flux is used as a constituent material or an add-on to the virgin flux.

There are disclosed lines for the processing of waste slag from submerged arc welding as one indicated in the description of JP55084298 or another published by Titus Flux company, which provides a line based on the grinding and sieving the crushed slag. Crushed slag by means of a line described by Titus Flux is directly used as a flux for welding or add-on to the virgin flux. Such way of utilizing the crushed material changes the characteristic of the flux and in consequence there are many doubts regarding the properties and quality of end product, in particular in the context of the high quality standards necessary for use in the welding process.

The process shown by present invention, which includes fragmentation of the slag to a fine grained particles size <0.35 mm, results in obtaining raw material. Such raw material can be used for the production of the virgin flux with full quality control. Raw material obtained by processing slag according to the method described in the invention can be applied not only in the production of welding virgin flux, but also in every other area in which raw materials are used, e.g. concrete production. The effect of preferred embodiments of the invention is not only to receive the quality value raw material from the waste in an environmentally friendly manner, but also an effective and simple way to reduce the cost of acquiring natural resources.

The present invention relates to a method of processing slag, in particular from submerged arc welding into the raw material. According to the process the dust is extracted from the slag in the first place. Subsequently, there is a magnetic separation of metal particles, after which the slag is crushed. Crushed material is sieved out to a specific grain size of raw material. The invention also includes the method in which the slag is supplied for the processing pre-prepared pieces preferably with a length of 10 mm to 200 mm and a width of 5 mm to 40 mm. According to the invention material too coarse which has not been sieved-out is again reprocessed into the raw material. Preferably, the sifting aims to obtain the raw material of grain size of less than 0.3 mm.

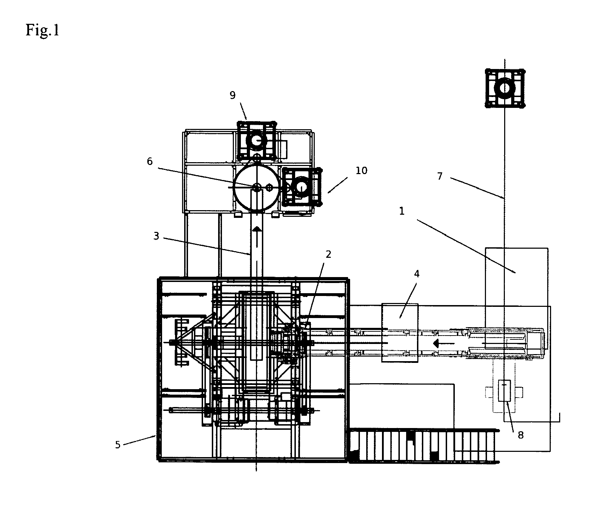

The invention also relates to the line utilizing the method of processing slag into raw material consisting of a hopper (1), belt conveyors (2) (3), the magnetic separator (4), shredding device (5) and sieving station (6). The line is also equipped with a hoist (7) through which the slag is supplied to the hopper (1). This hopper is equipped with a vibrating feeder (8) for evenly spreading the slag on belt conveyor (2). Moreover sieving station includes at least two containers (9) (10) used for collection of sieved-out and not-sieved-out material. The preferred solution includes the adjustment of the hoist (7), hopper (1) and sieving station containers (9) (10) to support the bags used for the transport of raw materials. The invention in the preferred embodiment is shown in the drawing in which Fig 1 shows a slag processing line according to the invention. Bags containing pre-prepared pieces of slag is supplied with the hoist (7) to hopper (1). From the hopper (1) through the vibrating feeder (8) the slag is evenly scattered on belt conveyor (2). Above the belt conveyor (2) there is a magnetic separator (4), which removes metal particles from the slag. Slag is transported further to the shredding device (5) where it is ground. Ground material goes on a conveyor belt (3) to the sieving station (6) where the raw material is sieved out to natural grain size of less than 0.3 mm. Sieved out natural raw material goes the container (9) which is adapted to collect the material in the bags used for the transport of raw materials. Not-sieved-out material goes into the bag placed in the container (10) from where it is shipped for reprocessing.

## Claims

1. Method of processing slag into raw material, wherein in the first place the dust is extracted from the slag and then the slag is subject to magnetic separation of metal particles after which is crushed and sieved out to a specific grain size of raw material.

2. The method according to claim 1 wherein the slag is from submerged arc welding.

3. The method according to claim 1 or 2 wherein the slag is preferably supplied in pieces of length from 10 mm to 200 mm and a width of 5 mm to 40 mm.

4. The method according to claim 1, 2 or 3, wherein the crushed material not-sieved out is again subject to the processing into raw material.

5. The method according to claim. 1, 2, 3 or 4 wherein the material is preferably sieved out to raw material of grain size less than 0.3 mm.

6. Line for processing slag into raw material comprising of hopper (1), belt conveyors (2) (3), the magnetic separator (4), shredding device (5) and sieving station (6), **characterized in that** it has a hoist (7) through which the slag is supplied to the hopper (1) and that this hopper (1) is equipped with a vibrating feeder (8) for even spreading of the slag on a belt conveyor (2), and the sieving station contains at least two containers (9) (10) used for collecting sieved-out and not-sieved out material.

7. Slag processing line according to claim 6 **characterized in that** the hoist (7), the hopper (1) and sieving station containers (9)(10) are capable to handle the bags used for the transport of raw materials.
